# EUROPEAN PATENT SPECIFICATION

(11) **EP 2 479 019 B1**
(45) Date of publication and mention of the grant of the patent: **17.04.2013**
(21) Application number: 11151891.6
(22) Date of filing: 24.01.2011
(51) Int. Cl.: B29C 49/20, B29C 49/42

(54) **Method of planting a handle and a bottle parison to a mold of blow-molding modules for manufacturing plastic containers**
Verfahren zum Einsetzen eines Griffs und eines Flaschenblasrohlings in eine Form von Blasformmodulen zur Herstellung von Kunststoffbehältern
Procédé de plantation d'une poignée et d'une paraison pour bouteille dans un moule de modules de moulage par soufflage pour la fabrication de récipients en plastique

(43) Date of publication of application: 25.07.2012
(73) Proprietor: Bottle-Top Development Co., Nantou City (TW)
(72) Inventor: Chin, Simon, Nantou City, Taiwan (TW); Hsieh, Arthur, Nantou City, Taiwan (TW); Sun, Wan-Chi, Nantou City, Taiwan (TW)
(74) Representative: 2K Patentanwälte Blasberg Kewitz & Reichel

(56) References cited:
- WO-A1-96/14975
- FR-A1- 2 796 591
- JP-A- 9 300 440

## Description

### FIELD OF THE INVENTION

The present invention relates to a blow-molding module for manufacturing plastic containers and particularly to a method of planting a handle and a bottle parison to a bottle blowing mold during fabrication of plastic containers with handles.

### BACKGROUND OF THE INVENTION

Conventionally, plastic bottles with handles, such as U.S. patent Nos. 5,988,418, 5,469,612 and 7,207,538, are usually fabricated by a bottle blowing machine. The bottle blowing machine produces a bottle body initially and then plants a handle onto the bottle body, such that an extra planting process and a higher production cost are required.

To overcome the aforesaid drawback, a technique, such as U.S. patent 6,444,158, is applied to directly plant a bottle parison and a handle into a bottle blowing mold to form a bottle body with attached handle at the same time during bottle blowing process in a bottle blowing machin. However, the planting path is vertical to the axis of the bottle parison and the handle and bottle parison are planted at the same time on the front side of the bottle blowing mold, so production yield is lower due to constraints of the required mechanism and cannot fully meet the demands.

Another U.S. patent 4,952,133 also discloses a technique to plant a bottle parison and a handle at the same time. It needs to position the handle and bottle parison at fixed locations relative to each other before the bottle parison is heated, after heated they are sent into a mold. Its production yield also is lower and cannot meet the demands.

Document FR 2 796 591 A1 discloses a method of planting a handle and a bottle parison to a mold for blow-molding modules for manufacturing plastic containers.

### SUMMARY OF THE INVENTION

The primary object of the present invention is to provide a method applied for blow-molding modules for manufacturing plastic containers during bottle blowing process and planting a handle and a bottle parison to the blow-molding module.

To achieve the foregoing object, the method of the present invention aims to plant a handle and bottle parison respectively in a blow-molding module for manufacturing plastic containers. The blow-molding module includes a rotary bracket, a bottle blowing mold, a bottle parison positioning device and a handle positioning device. The bottle blowing mold is located on the rotary bracket and has a mold-breaking state and a mold-closing state. The handle positioning device has a handle holding portion and is slidable up and down above the bottle blowing mold. The bottle parison positioning device has a bottle parison holding portion and is slidable up and down above the bottle blowing mold.

The method of the invention includes the steps of: first, placing the handle temporarily on the handle positioning device; then, placing the bottle parison temporarily on the bottle parison positioning device while the bottle blowing mold is in the mold-breaking state; planting the handle downward into the bottle blowing mold through the handle positioning device; making the bottle blowing mold from the mold-breaking state to the mold-closing state to hold the handle at a desired location; and planting the bottle parison downward into the bottle blowing mold through the bottle parison positioning device, and pressing tightly a mouth of the bottle parison at the same time.

Thus, in the method of the present invention, the handle and the bottle parison are respectively moved downward into the bottle blowing mold, so that during bottle blowing process to blow the bottle parison to form a bottle body, the handle also is planted at the same time on the bottle body. Therefore, the production yield can be increased and meet the demands

The foregoing, as well as additional objects, features and advantages of the invention will be more readily apparent from the following embodiment and detailed description, which proceed with reference to the accompanying drawings. The embodiment serves merely for illustrative purpose and is not the limitation of the invention.

### BRIEF DESCRIPTION OF THE DRAWINGS

FIG. 1 is a perspective view schematically showing a blow-molding module enabled to plant a handle according to the present invention.
FIGS. 2A to 2E are perspective views schematically showing the continuous operation of the blow-molding module enabled to plant a handle in bottle blowing process.

### DETAILED DESCRIPTION OF THE PREFERRED EMBODIMENT

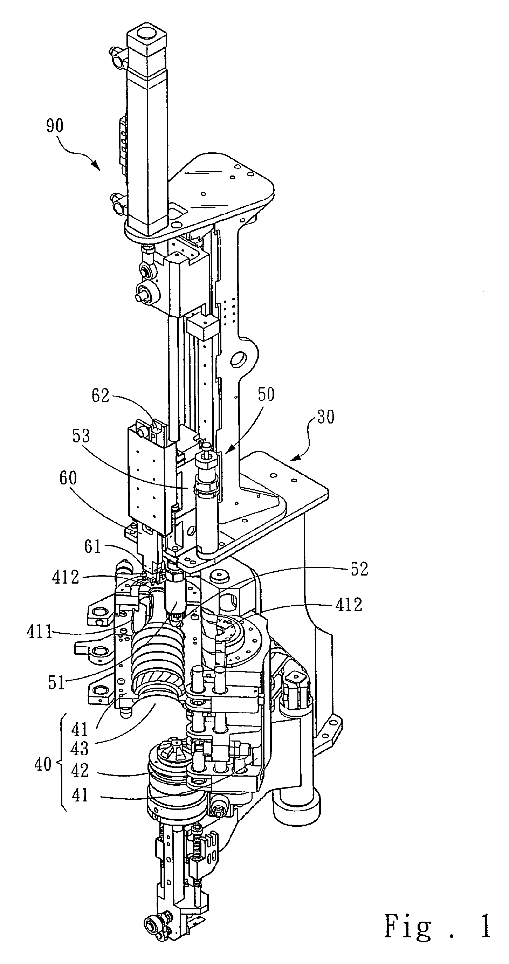

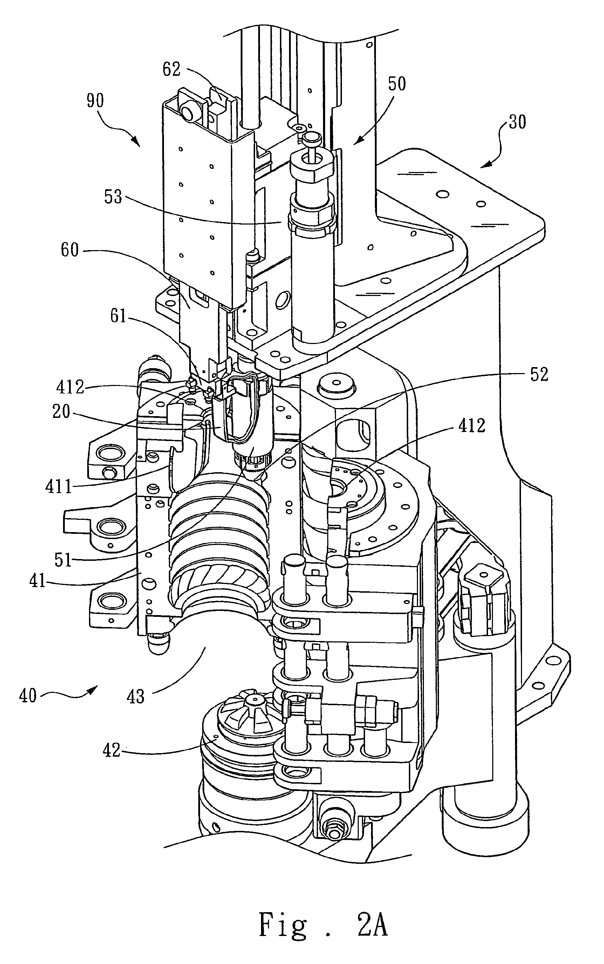

Please referring to FIGS. 1 and 2A through 2E, the present invention provides a method for planting a handle 20 and a bottle parison 10 through a blow-molding module 90 during a bottle blowing process. The blow-molding module 90 includes a rotary bracket 30, a bottle blowing mold 40, a bottle parison positioning device 50 and a handle positioning device 60.

The bottle blowing mold 40 is located on the rotary bracket 30 and has a mold-breaking state and a mold-closing state. The bottle blowing mold 40 further includes a pair of left and right molds 41 and a base mold 42 that can be coupled together in the mold-closing state to form a bottle blowing chamber 43. The left and right molds 41 include a pair of handle holding troughs 411 to hold the handle 20 in the bottle blowing mold 40, and also a pair of bottle parison holding docks 412 to hold the bottle parison 10 in the bottle blowing mold 40 and clamp tightly a mouth of the bottle parison 10 to facilitate bottle blowing process.

The bottle parison positioning device 50 is slidable up and down and located above the bottle blowing mold 40. The bottle parison position device 50 includes a bottle parison holding portion 51, a bottle mouth clamping portion 52 and a press cylinder 53 which has a first displacement and a second displacement. When the bottle blowing mold 40 is in the mold-breaking state the bottle parison positioning device 50 clamps and holds temporarily the bottle parison 10 on the bottle parison holding portions 51 by the press cylinder 53 in the first displacement. When the bottle blowing mold 40 is in the mold-closing state the press cylinder 53 moves the bottle parison 10 downward from a upper side along a path parallel with the axis of the bottle parison 10 in the second displacement to fix the bottle parison 10 in the bottle blowing mold 40, and the bottle mouth clamping portion 52 tightly clamps the bottle parison 10 on the bottle parison holding docks 412.

The handle positioning device 60 is slidable up and down and located above the bottle blowing mold 40. The handle positioning device 60 includes a handle holding portion 61 and an in-mold slide track 62. Before the bottle blowing mold 40 is in the mold-breaking state the handle positioning device 60 clamps the handle 20 on the handle holding portion 61 and hold temporarily the handle 20 above the bottle blowing mold 40. When the bottle blowing mold 40 is in the mold-breaking state the handle 20 is moved downwards from the upper side through the in-mold slide track 62 into the bottle blowing mold 40along a path parallel with the axis of the bottle parison 10. When the bottle blowing mold 40 is in the mold-closing state, the handle holding troughs 411 hold the handle 20 at a position corresponding to the bottle blowing mold 40.

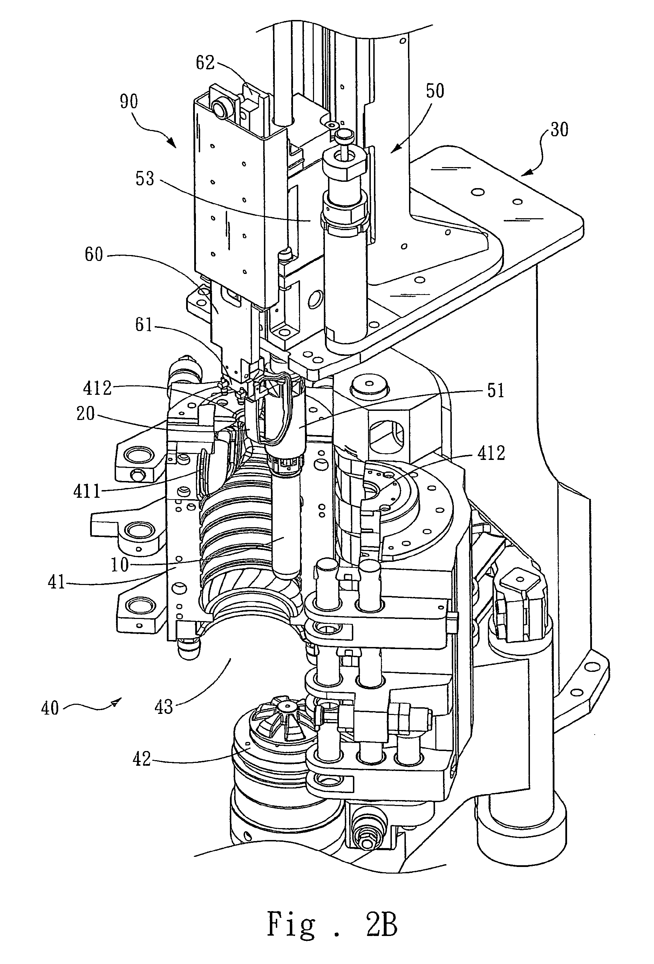

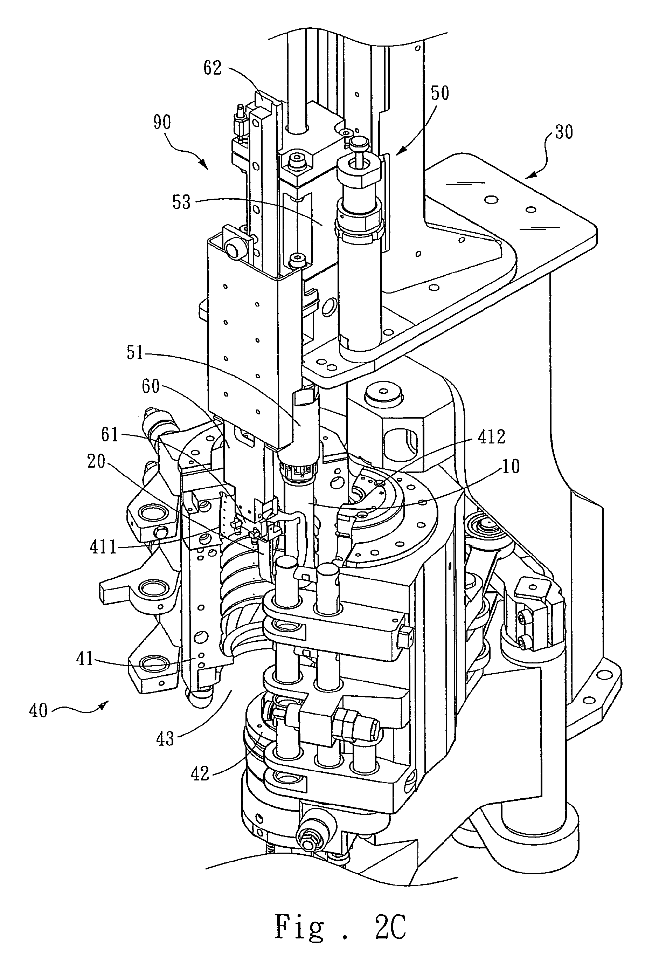

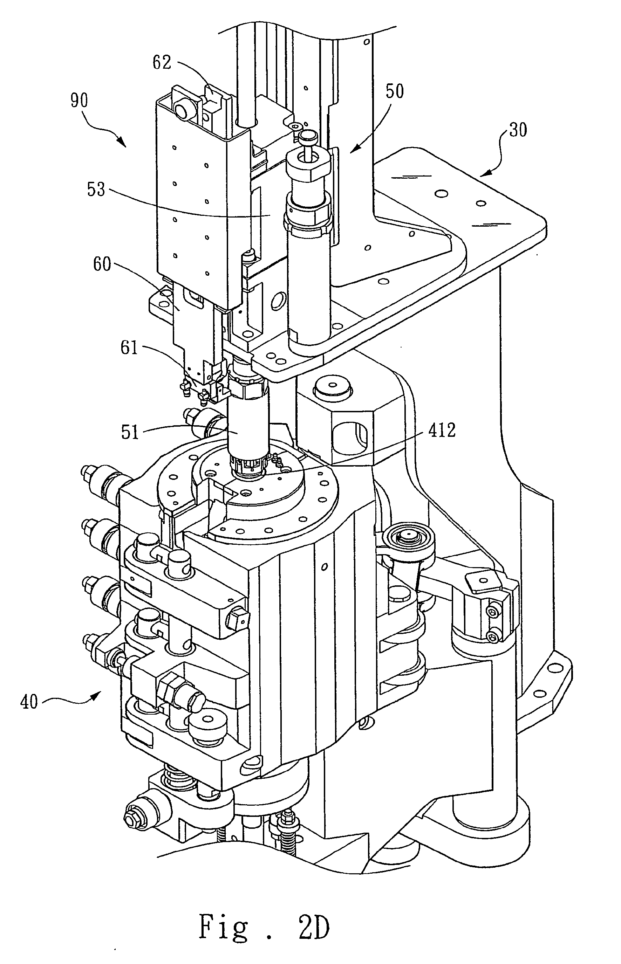

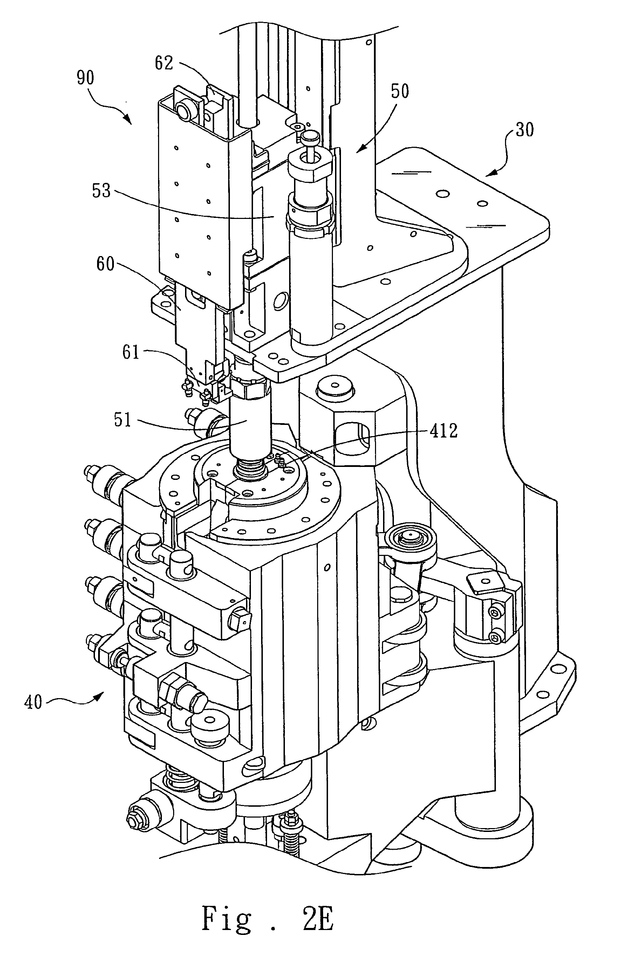

By means of the structure set forth above, the handle 20 can be planted through the blow-molding module 90 during bottle blowing process via steps shown in FIGS. 2A through 2E. First, the handle holding portion 61 holds the handle 20 temporarily above the bottle blowing mold 40 (referring to FIG. 2A). Then, when the bottle blowing mold 40 is in mold-breaking state, the press cylinder 53 in the first displacement holds temporarily the bottle parison 10 on the bottle parison holding portion 51 (referring to FIG. 2B). When the bottle blowing mold 40 is in the mold-breaking state, the handle 20 is moved downwards from the upper side into the bottle blowing mold 40 along a path parallel with the axis of the bottle parison 10 through the in-mold slide track 62 (referring to FIG. 2C). Next, when the bottle blowing mold 40 is in the mold-closing state, the handle holding troughs 411 fix the handle 20 at a position corresponding to the bottle blowing mold 40 (referring to FIG. 2D).At last, the press cylinder 53 in the second displacement moves the bottle parison 10 downward from an upper side into the bottle blowing mold 40 along a path parallel with the axis of the bottle parison 10 , and the bottle mouth clamping portion 52 tightly presses the bottle parison 10 on the bottle parison holding docks 412 (referring to FIG. 2E). Thus during the bottle blowing process, the bottle blank 10 and handle 20 are held in the bottle blowing mold 40, and the handle 20 also can be planted at the same time on the bottle body formed by the bottle parison 10.

In short, through the present invention, during the bottle blowing process the handle 20 and bottle parison 10 are moved respectively downward from the upper side into the bottle blowing mold 40 along a path parallel with the axis of the bottle parison 10 so as to allow the handle 20 to be planted onto the bottle body at the same time to meet the demands.

In summary there is disclosed a method of planting a handle and a bottle parison to a mold of blow-molding modules, the method including the steps of: first, holding a handle 20 temporarily on a handle positioning device 60; then, holding a bottle parison 10 temporarily on a bottle parison positioning device 50 while a bottle blowing mold 40 is in a mold-breaking state; moving the handle 20 downward into the bottle blowing mold 40 through the handle positioning device 60; positioning the handle 20 at a desired position while the bottle blowing mold 40 is switched to the mold-closing state; and moving the bottle parison 10 downward into the bottle blowing mold 40 through the bottle parison positioning device 50, and clamping the mouth of the bottle parison 10 at the same time.

## Claims

1. A method of planting a handle and a bottle parison to a mold for blow-molding modules for manufacturing plastic containers, the blow-molding module (90) including a rotary bracket (30), a bottle parison positioning device (50), a handle positioning device (60) and a bottle blowing mold (40) having a mold-breaking state and a mold-closing state, the method comprising the steps of:
holding a handle (20) temporarily through the handle positioning device (60) above the bottle blowing mold (40) before the mold-breaking state;
holding a bottle parison (10) temporarily through the bottle parison positioning device (50) during the mold-breaking state;
moving the handle (20) downward into the bottle blowing mold (40) through the handle positioning device (60) along a path parallel with the axis of the bottle parison (10);
holding the handle (20) in a fixed manner in a bottle blowing chamber (43) which is formed in the bottle blowing mold (40) during the mold-closing state; and
moving the bottle parison (10) downward into the bottle blowing mold (40) through the bottle parison positioning device (50) along a path parallel with the axis of the bottle parison (10) and clamping tightly a mouth of the bottle parison (10).

2. The method of claim 1, **characterized in that** the bottle blowing mold (40) is located on the rotary bracket (30), the bottle parison positioning device (50) including a bottle parison holding portion (51), a bottle mouth clamping portion (52) and a press cylinder (53), the bottle parison holding portion (51) holding the bottle parison (10) and being slidable up and down above the bottle blowing mold (40); the handle positioning device (60) including an in-mold slide track (62) and a handle holding portion (61) to hold the handle (20) and be slidable up and down above the bottle blowing mold (40).

3. The method of claim 2, **characterized in that** the bottle parison positioning device (50) is located above the bottle blowing mold (40) which holds the bottle parison (10) temporarily by the press cylinder (53) on the bottle parison holding portion (51) in the mold-breaking state.

4. The method of claim 3, **characterized in that** the press cylinder (53) moves the bottle parison (10) downward along a path parallel with the axis of the bottle parison (10) to be positioned on the bottle blowing mold (40) in the mold-closing state, the mouth of the bottle parison (10) being pressed by the bottle mouth clamping portion (52).

5. The method of claim 2, **characterized in that** the handle positioning device (60) is located above the bottle blowing mold (40) to hold temporarily the handle (20) through the handle holding portion (61) above the bottle blowing mold (40) before the mold-breaking state.

6. The method of claim 5, **characterized in that** the held handle (20) is moved downward through the in-mold slide track (62) along a path parallel with the axis of the bottle parison (10) and planted into the bottle blowing mold (40) in the mold-breaking state.

7. The method of claim 6, **characterized in that** the handle (20) planted in the bottle blowing mold (40) is fixedly held in the bottle blowing mold (40) through handle holding troughs to be positioned in the desired bottle blowing chamber (43) in the mold-closing state.

## Patentansprüche

1. Verfahren zum Einlegen eines Griffs und eines Flaschen-Blasrohlings in eine Form für Blasform-Einheiten zur Herstellung von Kunststoff-Behältern, wobei die Blasform-Einheit (90) eine drehbare Halterung (30), eine Flaschen-Blasrohling-Positionier-Vorrichtung (50), eine Griff-Positionier-Vorrichtung (60) und eine Flaschen-Blasform (40) mit einem Form-aufgebrochenen Zustand und einem Form-geschlossenen Zustand aufweist, wobei das Verfahren die Schritte aufweist:
Halten eines Griffs (20) vorübergehend durch die Griff-Positionier-Vorrichtung (60) oberhalb der Flaschen-Blasform (40) vor dem Form-aufgebrochenen Zustand;
Halten eines Flaschen-Blasrohlings (10) vorübergehend durch die Flaschen-Blasrohling-Positionier-Vorrichtung (50) während des Form-aufgebrochenen Zustandes;
Bewegen des Griffs (20) nach Unten in die Flaschen-Blasform (40) durch die Griff-Positionier-Vorrichtung (60) entlang eines Weges parallel zur Achse des Flaschen-Blasrohlings (10);
Halten des Griffs (20) in einer festen Weise in einer Flaschen-Blaskammer (43), die in der Flaschen-Blasform (40) während der Form-geschlossenen Zustands ausgeformt wird; und
Bewegen des Flaschen-Blasrohlings (10) nach Unten in die Flaschen-Blasform (40) durch die Flaschen-Blasrohling-Positionier-Vorrichtung (50) entlang eines Weges parallel zur Achse des Flaschen-Blasrohling (10) und festes Einspannen einer Mündung des Flaschen-Blasrohlings (10).

2. Verfahren nach Anspruch 1, **dadurch gekennzeichnet, dass** die Flaschen-Blasform (40) auf der drehbaren Halterung (30) angeordnet ist, wobei die Flaschen-Blasrohling-Positionier-Vorrichtung (50) einen Flaschen-Blasrohling-Halteabschnitt (51), einen Flaschen-Mündungs-Einspannabschnitt (52) und einen Druck-Zylinder (53) aufweist, wobei der Flaschen-Blasrohling-Halteabschnitt (51) den Flaschen-Blasrohling (10) hält und oberhalb der Flaschen-Blasform (40) nach Oben und Unten verschiebbar ist; wobei die Griff-Positionier-Vorrichtung (60) eine in In-Mold-Gleitschiene (62) und einen Griff-Halteabschnitt (B1) aufweist, um den Griff (20) zu halten und um verschiebbar nach Oben und Unten oberhalb der Flaschen-Blasform (40) zu sein.

3. Verfahren nach Anspruch 2, **dadurch gekennzeichnet, dass** die Flaschen-Blasrohling-Positionier-Vorrichtung (50) oberhalb der Flaschen-Blasform (40) angeordnet ist, die den Flaschen-Blasrohling (10) vorübergehend durch den Druck-Zylinder (53) auf dem Flaschen-Blasrohling-Halteabschnitt (51) in dem Form-aufgebrochenen Zustand hält.

4. Verfahren nach Anspruch 3, **dadurch gekennzeichnet, dass** der Druck-Zylinder (53) den Flaschen-Blasrohling (10) nach Unten entlang eines Weges parallel zur Achse des Flaschen-Blasrohling (10) bewegt, um an der Flaschen-Blasform (40) in dem Form-geschlossenen Zustand positioniert zu werden, wobei die Mündung des Flaschen-Blasrohlings (10) durch den Flaschen-Mündungs-Einspannabschnitt (52) gedrückt wird.

5. Verfahren nach Anspruch 2, **dadurch gekennzeichnet, dass** die Griff-Positionier-Vorrichtung (60) oberhalb der Flaschen-Blasform (40) angeordnet ist, um vorübergehend den Griff (20) durch den Griff-Halteabschnitt (61) oberhalb der Flaschen-Blasform (40) vor dem Form-aufgebrochenen Zustand zu halten.

6. Verfahren nach Anspruch 5, **dadurch gekennzeichnet, dass** der gehaltene Griff (20) durch die In-Mold-Gleitschiene (62) nach Unten entlang eines Weges parallel zur Achse des Flaschen-Blasrohlings (10) bewegt wird und in die Flaschen-Blasform (40) in dem Form-aufgebrochenen Zustand eingelegt wird.

7. Verfahren nach Anspruch 6, **dadurch gekennzeichnet, dass** der Griff (20), der in die Flaschen-Blasform (40) eingelegt ist, fest in der Flaschen-Blasform (40) durch die Griff-Haltemulden gehalten wird, um in der gewünschten Flaschen-Blaskammer (43) in dem Form-geschlossenen Zustand positioniert zu werden.

## Revendications

1. Une méthode d'installation d'une poignée et d'une paraison de bouteille dans un moule de modules de moulage par soufflage pour la fabrication de récipients en plastique, le module de moulage par soufflage (90) comportant un support rotatif (30), un dispositif de positionnement de paraison de bouteille (50), un dispositif de positionnement de poignée (60) et un moule de soufflage de bouteille (40) ayant un état d'ouverture de moulage et un état de fermeture de moulage, la méthode comportant les étapes :
le maintien temporaire d'une poignée (20) via le dispositif de positionnement de poignée (60) au-dessus du moule de soufflage de bouteille (40) avant l'état d'ouverture de moulage ;
le maintien temporaire d'une paraison de bouteille (10) par l'intermédiaire du dispositif de positionnement de paraison de bouteille (50) durant l'état d'ouverture de moulage ;
le déplacement de la poignée (20) vers le bas dans le moule de soufflage de moulage (40) par l'intermédiaire du dispositif de positionnement de la poignée (60) le long d'un chemin parallèle à l'axe de la paraison de bouteille (10) ;
le maintien fixe de la poignée (20) dans une chambre de soufflage de bouteille (43) qui est formée dans le moule de soufflage de bouteille (40) durant l'état de fermeture de moulage ; et
le déplacement de la paraison de bouteille (10) vers le bas dans le moule de soufflage de moulage par l'intermédiaire du dispositif de positionnement de paraison de bouteille (50) le long d'un chemin parallèle à l'axe de paraison de bouteille (10) et le serrage ferme du col de la paraison de bouteille.

2. La méthode de la revendication 1, **caractérisée en ce que** le moule de soufflage de bouteille (40) est disposé sur le support rotatif (30), le dispositif de positionnement de la paraison de bouteille (50) comportant un élément de maintien de la paraison de bouteille (51), un élément de serrage de col de la bouteille (52) et un cylindre de presse (53), l'élément de maintien de la paraison de bouteille (51) maintenant la paraison de bouteille (10) et étant coulissant vers le haut et vers le bas au dessus du moule de soufflage de bouteille (40) ; le dispositif de positionnement de poignée (60) comportant un coulisseau moulé (62) et un élément de maintien de poignée (61) pour le maintien de la poignée (20) et pouvant coulisser vers le haut et vers le bas au-dessus du moule de soufflage de bouteille (40).

3. La méthode de la revendication 2, **caractérisée en ce que** le dispositif de positionnement de paraison de bouteille (50) est situé au-dessus du moule de soufflage de bouteille (40) maintenant temporairement la paraison de bouteille (10) par le cylindre de presse (53) sur l'élément de maintien de paraison de bouteille (51) dans l'état d'ouverture de moulage.

4. La méthode de la revendication 3, **caractérisée en ce que** le cylindre de presse (53) déplace la paraison de bouteille (10) vers le bas le long d'un chemin parallèle à l'axe de la paraison de bouteille (10) pour un positionnement sur le moule de soufflage de bouteille (40) dans l'état de fermeture de moulage, le col de la paraison de bouteille (10) étant pressé par l'élément de serrage du col de bouteille (52).

5. La méthode de la revendication 2, **caractérisée en ce que** le dispositif de positionnement de poignée (60) est disposé au dessus du moule de soufflage de bouteille (40) pour le maintien temporaire de la poignée (20) par l'intermédiaire de l'élément de maintien de poignée (61) au dessus du moule de soufflage de bouteille (40) avant l'état d'ouverture de moulage.

6. La méthode de la revendication 5, **caractérisée en ce que** la poignée maintenue (20) est déplacée vers le bas par l'intermédiaire d'un coulisseau moulé (62) le long d'un chemin parallèle à l'axe de la paraison de bouteille (10) et planté dans le moule de soufflage de bouteille (40) dans l'état d'ouverture de moulage ;

7. La méthode de la revendication 6, **caractérisée en ce que** la poignée (20) plantée dans le moule de soufflage de bouteille (40) est fixement maintenue dans le moule de soufflage de bouteille (40) par l'intermédiaire de goulottes de maintien de poignée positionnées dans la chambre de soufflage de bouteille désirée (43) durant l'état de fermeture de moulage.
